# EUROPÄISCHE PATENTSCHRIFT

(11) **EP 2 494 275 B1**
(45) Veröffentlichungstag und Bekanntmachung des Hinweises auf die Patenterteilung: **13.07.2016**
(21) Anmeldenummer: 10771427.1
(22) Anmeldetag: 25.10.2010
(51) Int. Cl.: F23L 15/00

(54) **ÖLBRENNER, REGELEINRICHTUNG SOWIE REGELUNGSVERFAHREN HIERZU**
OIL BURNER, CONTROLLER AND CONTROL METHOD THEREFOR
BRÛLEUR À HUILE, DISPOSITIF DE RÉGULATION AINSI QUE PROCÉDÉ DE RÉGULATION ASSOCIÉ

(30) Priorität: 29.10.2009 DE 102009051327
(43) Veröffentlichungstag der Anmeldung: 05.09.2012
(73) Patentinhaber: Robert Bosch GmbH, 70442 Stuttgart (DE)
(72) Erfinder: RAUSCH, Rainer, 36304 Alsfeld (DE); Schuessler, Michael, 35043 Marburg-Ginseldorf (DE); CECEN, Sadik, 35102 Lohra (DE); ROLLMANN, Juergen, 35457 Lollar (DE); GERLING, Detlev, 35041 Marburg (DE)
(86) Internationale Anmeldenummer: PCT/EP2010/066074
(87) Internationale Veröffentlichungsnummer: WO 2011/051232

(56) Entgegenhaltungen:
- DE-B1- 1 526 178
- US-A- 4 516 628

## Beschreibung

Die Erfindung betrifft ein Verfahren zur Regelung einer Temperatur eines Verbrennungsmediums in einer Mischzone eines Brenners nach dem Oberbegriff des Patentanspruches 1. Weiter betrifft die Erfindung ein Verfahren zur Regelung eines Brenners, insbesondere eines Ölbrenners, wobei eine Brennerleistung moduliert wird, nach dem Oberbegriff des Anspruchs 5. Zudem betrifft die Erfindung eine Regeleinrichtung für einen Brenner, insbesondere einen Ölbrenner, nach dem Oberbegriff des Anspruchs 6. Weiter betrifft die Erfindung einen Brenner, insbesondere ein Ölbrenner, zum Erzeugen von Wärmeenergie mittels Feuerung gemäß dem Oberbegriff des Anspruchs 11.

Aus dem allgemeinen Stand der Technik sind Ölbrenner bekannt. Bei diesen ist ein Verbrennungsluftgebläse im Brenner integriert und besonders bei Brennern geringer Leistung wird das Heizöl in Kleinlast gezündet. In Anlagen, insbesondere Großfeuerungsanlagen, bei denen Öle verwendet werden, die schwieriger zu zünden sind, zum Beispiel schweres Heizöl, wird ein separater gasbefeuerter Zündbrenner genutzt. Generell muss der flüssige Brennstoff im Brennraum möglichst fein zerstäubt werden, um eine große Oberfläche für die Verbrennungsreaktion zu erreichen. Aus Emissionsgründen werden eine lange Verweilzeit und eine möglichst geringe Verbrennungstemperatur angestrebt, um einen guten Ausbrand bei geringer Stickoxidbildung zu erreichen. Ölbrenner sind allgemein mit folgenden Formen der Zerstäubung bekannt: Druckzerstäubung, Rotationszerstäubung und Zerstäubung mittels Zerstäubermedium. Für den Wirkungsgrad eines Ölbrenners ist die Temperatur in einer Mischzone ausschlaggebend.

Weiterhin ist aus der US 4 516 628 A ein Wärmerückgewinnungssystem bekannt, bei dem ein von einem Gebläse geförderter Luftstrom auf zwei Strömungswege aufgeteilt wird. Dabei kann der Luftstrom mittels thermostatgesteuerter Stellelemente im Hauptstrom sowie in den beiden Teilströmen beeinflusst werden.

Zudem offenbart die DE 1 526 178 B1 eine Regeleinrichtung für einen Dampferzeuger mit mehreren einblasenden Kohlenstaubmühlen, bei der mit einem Gebläse ein Luftstrom zeugt und dann in zwei Teilströme aufgeteilt wird. Ein erster Teilstrom gelangt dabei direkt zu einem Brenner 5, während ein zweiter Teilstrom über einen Primärlufterhitzer in eine Heißluftleitung strömt.

Besonders bei Feuerungsanlagen für Gebäude ist ein Modulieren eines Brenners wichtig, um die Feuerungsleistung möglichst gut an den aktuellen Wärmebedarf der angeschlossenen Heizkreise anzupassen. Man erreicht damit lange Laufzeiten, wenig Brennerstarts und bei Brennwertkesseln einen guten Wirkungsgrad durch effektive Brennwertnutzung.

Der Erfindung liegt die Aufgabe zugrunde, eine möglichst konstante Temperatur in der Mischzone in verschiedenen Betriebszuständen und bei veränderter Brennerleistung zu bewirken.

Erfindungsgemäß wird dies durch die Gegenstände mit den Merkmalen der Patentansprüche 1 und 6 gelost. Vorteilhafte Weiterbildungen sind den abhangigen Anspruchen zu entnehmen.

Das erfindungsgemäße Verfahren zur Regelung einer Temperatur eines Verbrennungsmediums in einer Mischzone eines Brenners, umfasst den Schritt Zuführen der Verbrennungsluft für einen Brennerbetrieb zu der Mischzone über einen Zuführweg, wobei die Verbrennungsluft in einem ersten Betriebsmodus durch einen ersten Zuführstrang strömt und in einem zweiten Betriebsmodus in einstellbaren Anteilen durch den ersten und/oder einen zweiten Zuführstrang strömt. Das Verfahren ist dadurch gekennzeichnet, dass dabei der Verbrennungsluft im ersten Zuführstrang Wärme durch ein ein- und ausschaltbares Heizelement zugeführt wird. Im zweiten Zuführstrang wird Wärme aus einer Verbrennungszone zugeführt. Bei einer Abweichung der Temperatur der Verbrennungsluft in der Mischzone von einer Solltemperatur wird die Einstellung der Anteile der Verbrennungsluft und/oder der Schaltzustand des Heizelementes verändert, wodurch die Temperatur der Verbrennungsluft in der Mischzone durch Mischung der Verbrennungsluftanteile auf eine Solltemperatur einstellbar ist.

In einer Ausführungsform des erfindungsgemäßen Verfahrens ist vorgesehen, dass die Temperatur in der Mischzone erfasst und mit vorgegebenen Werten verglichen wird. Bei einer weiteren Ausführungsform ist vorgesehen, dass bei Feststellung einer Abweichung der Temperatur ein separater Zuführstrang für einen Startmodus geöffnet wird, durch den kühlere Verbrennungsluft zugeführt wird. Der Startmodus ist der Betriebsmodus beim Starten des Brenners.

Das erfindungsgemäße Verfahren zur Regelung eines Brenners, insbesondere eines Ölbrenners, wobei eine Brennerleistung moduliert wird, ist dadurch gekennzeichnet, dass eine Aufteilung der Verbrennungsluft auf Anteile für einen ersten und/oder zweiten Zuführstrang und/oder eine Einstellung des Schaltzustandes des Heizelementes in Abhängigkeit des Modulationsgrades verändert wird. Dabei wird das Modulieren temperaturabhängig nach dem erfindungsgemäßen Verfahren zur Regelung einer Temperatur der Verbrennungsluft in einer Mischzone eines Brenners durchgeführt.

Die Regeleinrichtung für einen Brenner, insbesondere einen Ölbrenner, weist mindestens einen Zufuhrstrang zum Zuführen von Verbrennungsluft für einen Dauerbetrieb des Brenners auf, wobei der Zufuhrstrang eine Wärmeinrichtung zum Vorwärmen des zuzuführenden Verbrennungsmediums umfasst. Ein separater Zuführstrang zum Zuführen einer Verbrennungsluft ist für den Start des Brenners vorgesehen, wobei die mindestens zwei Zuführstränge über eine Stelleinheit gekoppelt sind, welche bei Abweichen einer Temperatur der über den Zuführstrang für den Betrieb zugeführten Verbrennungsluft den während des Dauerbetriebs gesperrten Zuführstrang für den Start des Brenners öffnet, sodass eine Mischung der über beide Zufuhrstränge zugeführten Verbrennungsmedien erfolgt.

Der Dauerbetrieb des Brenners erfolgt in dem stationären Betriebsmodus des Brenners. Ein Start des Brenners wird über den Betriebsmodus "Start" ausgeführt. Während des Dauerbetriebs ist ein Heizelement in dem Zuführstrang für den Start-Betriebsmodus abschaltbar.

In einer weiteren Ausführungsform ist die Regeleinrichtung gekennzeichnet durch einen ersten Zuführstrang mit einem ein- und ausschaltbaren Heizelement, einen zum ersten Zuführstrang parallel angeordneten zweiten Zuführstrang mit einem aus einer Verbrennungszone beheizbaren Wärmetauscher und einer Stelleinheit zur Aufteilung der Verbrennungsluft auf Verbrennungsluftanteile des ersten und zweiten Zuführstranges. Dadurch ist die Temperatur der Verbrennungsluft in der Mischzone durch Mischung der Verbrennungsluftanteile auf eine Solltemperatur einstellbar.

In noch einer weiteren Ausführungsform der vorliegenden Erfindung ist vorgesehen, dass die Stelleinheit eingangsseitig mit einer Speiseeinheit zum Zuführen der Verbrennungsluft gekoppelt ist. Die Speiseeinheit umfasst in einer Ausführungsform ein Gebläse zum Einspeisen von Verbrennungsluft. In anderen Ausführungsformen umfasst die Speiseeinheit mindestens eine Öldüse und wahlweise einen Ölvorwärmer zum Einspeisen von Öl.

Ein Ausführungsbeispiel der erfindungsgemäßen Regeleinrichtung sieht weiter vor, dass die Stelleinheit über einen Aktor betätigbare Stellelemente aufweist, um die ausgangsseitig abzweigenden Zufuhrstränge zu sperren und/oder zu öffnen.

Eine weitere vorteilhafte Ausführungsform der vorliegenden Erfindung sieht vor, dass jeder Zufuhrstrang eine Wärmeeinrichtung zum Vorwärmen des Verbrennungsmediums aufweist. Zumindest eine Wärmeeinrichtung ist abschaltbar ausgebildet. Zudem sieht eine weitere Ausführungsform der vorliegenden Erfindung vor, dass die Wärmeeinrichtung des Zufuhrstrangs für den Start des Brenners schaltbar ist, sodass während der unterschiedlichen Betriebsmodi des Brenners das Verbrennungsmedium erwärmt und/oder unbehandelt zugeführt wird.

Noch eine andere vorteilhafte Ausführungsform der vorliegenden Erfindung sieht vor, dass mindestens eine Temperaturerfassungseinheit im Bereich der Mischzone vorgesehen ist, um die Temperatur in der Mischzone zu erfassen.

In wiederum einer anderen Ausführungsform der vorliegenden Erfindung ist vorgesehen, dass mindestens eine weitere Stelleinheit vorgesehen ist, um eine Vorwärmung mindestens eines Verbrennungsluftstroms zu regeln.

Der erfindungsgemäße Brenner, insbesondere ein Ölbrenner, zum Erzeugen von Wärmeenergie mittels Feuerung, ist dadurch gekennzeichnet, dass eine erfindungsgemäße Regeleinrichtung vorgesehen ist. Integriert wird der Brenner in ein Heizungssystem zur Erzeugung von Energie mittels Verbrennen von einem Energieträger mit einer Heizungsanlage zum Verbrennen des Energieträgers.

Mit den erfindungsgemäßen Verfahren, der erfindungsgemäßen Regeleinrichtung, dem erfindungsgemäßen Brenner werden insbesondere die folgenden Vorteile realisiert:
Mit der Erfindung wird die Temperatur in der Mischzone in allen Betriebszuständen, auch bei veränderter Brennerleistung, auf gleichem Niveau gehalten. Somit wird eine gute Robustheit im Betrieb, mit sicheren Brennerstarts und einer emissionsarmen Verbrennung erreicht. Dadurch, dass der Verbrennungsluftvolumenstrom wahlweise durch zwei Kanäle führbar ist, wird im Startbetrieb die Luft über einen Kanal geführt und durch ein bestromtes Heizelement erwärmt. Im stationären Betrieb wird die Luft über einen anderen Kanal geführt und durch einen Rohrwärmetauscher erwärmt. Die Umschaltung der Kanäle in den einzelnen Betriebsphasen ist beliebig regelbar, sodass ein Modulieren möglich ist. Durch das Modulieren auf Kleinlast im stationären Betrieb verringert sich der Volumenstrom der Verbrennungsluft, die Strömungsgeschwindigkeit verringert sich und die Verweilzeit erhöht sich. Eine Temperaturerhöhung wird mittels der Erfindung erkannt und es werden dann entsprechende Gegenmaßnahmen eingeleitet, sodass die Temperatur wieder auf ein konstantes, für den aktuellen Betriebszustand günstiges Niveau geregelt wird. Dies erfolgt in einer Ausgestaltung durch Öffnen des ersten Kanals, über den kalte Luft über das nicht bestromte Heizelement in die Mischzone gelangt, wo es sich mit der Luft aus dem Wärmetauscher vermischt und ein gleichbleibendes Temperaturniveau erreicht. Mit diesem Verfahren und/oder einer zugehörigen Mechanik ist es zum einen möglich, die Mischtemperatur während der Modulation auf gleichem Niveau zu halten, zum anderen ermöglicht es, durch eine mögliche geometrische Anpassung des Wärmetauschers und der elektrischen Leistung des Heizelementes die Temperatur auch auf einem höheren/niedrigeren Niveau zu halten. Damit sind auch biogene Brennstoffe mit unterschiedlicher Entzündungstemperatur effizient verbrennbar.

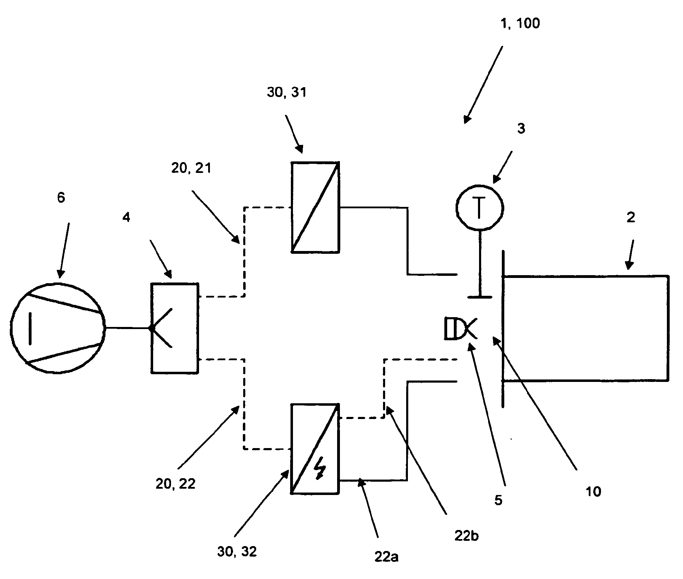

Die Zeichnung stellt ein Ausführungsbeispiel der Erfindung dar und zeigt in der einzigen Figur schematisch als Schaltbild einen Brenner eines Heizungssystems mit einer Regeleinrichtung.

Die Figur zeigt schematisch als Schaltbild einen Brenner 100 eines Heizungssystems mit einer Regeleinrichtung 1. Der Brenner 100 umfasst einen Brennstab 2 für eine Verbrennung eines Verbrennungsmediums. Der Brenner 100 ist vorliegend als modulierender Ölbrenner ausgebildet. Entsprechend ist das Verbrennungsmedium Öl, welches über den Brennstab 2 verbrannt wird. Neben Öl als erstem Verbrennungsmedium wird zudem Luft für eine Verbrennung zugeführt. Das Öl wird über eine Öldüse 5 in eine Mischzone 10, im Bereich vor der Oldüse und innerhalb des Brennstabes 2, gefördert. Luft und Öl werden dort für ein optimales Verbrennungsgemisch gemischt.

Der Verbrennungsluftvolumenstrom wird wahlweise über einen von zwei Zuführsträngen 20 der Mischzone 10 zugeführt. Hierzu führt ein erster Zuführstrang 21 den Luftvolumenstrom für einen Betriebsmodus "stationärer Betrieb" zu der Mischzone 10. Ein zweiter Zuführstrang 22 führt den Luftvolumenstrom für einen Betriebsmodus "Start" zu. Der jeweilige Zuführstrang ist über eine Stelleinheit 4, die einem Gebläse 6 zum Fördern des Luftvolumenstroms nachgeschaltet ist, wählbar. Über die Stelleinheit 4, die als Umschaltklappe und/oder Mischsteller ausgebildet ist, ist der Luftvolumenstrom verzweigbar.

Im "Start"-Betriebsmodus wird der Luftvolumenstrom über den zweiten Zuführstrang 22 zu einer Wärmeinrichtung 30 geführt, die in dem zweiten Zuführstrang 22 als bestromtes Heizelement 32 ausgebildet ist. Das Heizelement 32 ist schaltbar. Im "Start"-Betriebsmodus wird der zugeführte Luftvolumenstrom in dem zugeschalteten Heizelement 32 erwärmt. Von dort wird der erwärmte Luftvolumenstrom über den Warmluftzufuhrstrang 22a zu der Mischzone 10 weitergeleitet.

Im Betriebsmodus "stationärer Betrieb" wird der über das Gebläse 6 zugeführte Luftvolumenstrom durch die Stelleinheit 4 in den ersten Zuführstrang 21 geleitet. Der so geleitete Luftvolumenstrom gelangt über den ersten Zuführstrang 21 zu und durch eine als Rohrwärmetauscher 31 ausgebildete Wärmeeinheit 30, wo der Luftvolumenstrom erwärmt wird. Die Umschaltung der Zuführstränge 20 erfolgt in den einzelnen Betriebsphasen über einen Servomotor mit einer Luftklappe.

Der Brenner 100 ist für einen Maximallastbetrieb ausgelegt. Durch ein Modulieren auf Kleinlast im stationären Betrieb verringert sich der Volumenstrom der Verbrennungsluft, womit sich auch die Strömungsgeschwindigkeit des Luftvolumenstroms verringert und die Verweilzeit entsprechend ansteigt. Das führt dazu, dass der Luftvolumenstrom mit erhöhter Temperatur in die Mischzone 10 gelangt. Um dieses zu verhindern, ist die Regeleinrichtung vorgesehen. Diese umfasst unter anderem eine als Temperatursensor ausgebildete Temperaturerfassungseinheit 3, welche die Temperaturen im Bereich der Mischzone 10 erfasst. Übersteigt die erfasste Temperatur einen Sollwert, so öffnet der Servomotor den zweiten Zuführstrang 22, der für den Betriebsmodus "Start" vorgesehen ist. Gegenüber dem Start-Betriebsmodus wird das Heizelement 32 nicht zu- oder eingeschaltet, sodass der Luftvolumenstrom, der durch den zweiten Zuführstrang 22 strömt, ohne Erwärmung durch das Heizelement 32 über einen Kaltluftzufuhrstrang 22b in die Mischzone 10 gelangt, wo er sich mit der Luft aus der Wärmeinrichtung 32 (oder dem Wärmetauscher 31) vermischt. Über die Regeleinrichtung 1 ist durch entsprechendes Steuern der Stelleinheit 4 ein gleichbleibendes Temperaturniveau in der Mischzone 10 realisiert. Mit der Erfindung ist es möglich, die Mischtemperatur in der Mischzone während der Modulation auf gleichem Niveau zu halten. Durch eine entsprechende Ausbildung ist das Beibehalten einer konstanten Mischtemperatur auch auf einem beliebigen, zum Beispiel einem höheren oder einem niedrigeren, Temperaturniveau möglich. Hierzu müssten ggf. der Wärmetauscher 31 und eine elektrische Leistung des Heizelementes 4 entsprechend angepasst ausgelegt werden. Auf diese Weise ist die Erfindung auch für die Verbrennung biogener Brennstoffe mit unterschiedliche Zündtemperaturen einsetzbar.

## Patentansprüche

1. Verfahren zur Regelung einer Temperatur einer Verbrennungsluft in einer Mischzone (10) eines Brenners (100), mit einer Zuführung der Verbrennungsluft für einen Brennerbetrieb zu der Mischzone (10) über einen Zuführweg (20), wobei die Verbrennungsluft in einem ersten Betriebsmodus durch einen ersten Zuführstrang (22) strömt und in einem zweiten Betriebsmodus in einstellbaren Anteilen durch den ersten und/oder einen zweiten Zuführstrang (21) strömt, und im zweiten Zuführstrang (21) Wärme aus einer Verbrennungszone zugeführt wird,
**dadurch gekennzeichnet, dass**
der Verbrennungsluft im ersten Zuführstrang (22) Wärme durch ein ein- und ausschaltbares Heizelement zugeführt wird.

2. Verfahren nach Anspruch 1,
**dadurch gekennzeichnet, dass** bei einer Abweichung der Temperatur der Verbrennungsluft in der Mischzone (10) von einer Solltemperatur die Einstellung der Anteile der Verbrennungsluft und/oder der Schaltzustand des Heizelementes verändert wird, wodurch die Temperatur der Verbrennungsluft in der Mischzone (10) durch Mischung der Verbrennungsluftanteile auf eine Solltemperatur einstellbar ist.

3. Verfahren nach Anspruch 1 oder 2,
**dadurch gekennzeichnet, dass** die Temperatur in der Mischzone (10) erfasst und mit vorgegebenen Werten verglichen wird.

4. Verfahren nach einem der Ansprüche 1 bis 3,
**dadurch gekennzeichnet, dass** die Strömungen der Verbrennungsluftanteile durch den ersten und den zweiten Zuführstrang (21, 22) parallel erfolgen.

5. Verfahren zur Regelung eines Brenners (100), insbesondere eines Ölbrenners, wobei eine Brennerleistung moduliert wird,
**dadurch gekennzeichnet, dass** eine Aufteilung der Verbrennungsluft auf Anteile für einen ersten und/oder zweiten Zuführstrang (21, 22) und/oder eine Einstellung des Schaltzustandes des Heizelementes (32) in Abhängigkeit des Modulationsgrades nach einem Verfahren gemäß einem der Ansprüche 1 bis 4 verändert wird.

6. Regeleinrichtung (1) für einen Brenner (100), insbesondere einen Ölbrenner, mit einem Zuführweg (20) zum Zuführen einer Verbrennungsluft zu einer Mischzone für einen Betrieb des Brenners (100), wobei der Zuführweg (20) eine Wärmeeinrichtung (30) zum Vorwärmen der zuzuführenden Verbrennungsluft aufweist, der Zuführweg (20) einen ersten Zuführstrang (22), einen zum ersten Zuführstrang (22) parallel angeordneten zweiten Zuführstrang (21) mit einem aus einer Verbrennungszone beheizbaren Wärmetauscher (31) und eine Stelleinheit (4) zur Aufteilung der Verbrennungsluft auf Verbrennungsluftanteile des ersten und zweiten Zuführstranges umfasst, wodurch die Temperatur der Verbrennungsluft in der Mischzone (10) durch Mischung der Verbrennungsluftanteile auf eine Solltemperatur einstellbar ist,
**dadurch gekennzeichnet, dass**
der erste Zuführstrang (22) mit einem ein- und ausschaltbaren Heizelement (32) ausgestattet ist.

7. Regeleinrichtung (1) nach Anspruch 6,
**dadurch gekennzeichnet, dass** die Stelleinheit (4) über einen Aktor betätigbare Stellelemente aufweist, um die ausgangsseitig abzweigenden Zufuhrstränge (21, 22) zu sperren und/oder zu öffnen.

8. Regeleinrichtung (1) nach einem der Ansprüche 6 bis 7,
**dadurch gekennzeichnet, dass** die Wärmeeinrichtung (32) des Zufuhrstangs (22) für den Start des Brenners (100) schaltbar ist, sodass während der unterschiedlichen Betriebsmodi des Brenners (100) die Verbrennungsluft erwärmt und/oder unbehandelt zugeführt wird.

9. Regeleinrichtung (1) nach einem der Ansprüche 6 bis 8,
**dadurch gekennzeichnet, dass** zur Erfassung der Temperatur in der Mischzone (10) mindestens eine Temperaturerfassungseinheit (3) im Bereich der Mischzone (10) vorgesehen ist.

10. Regeleinrichtung (1) nach einem der Ansprüche 6 bis 9,
**dadurch gekennzeichnet, dass** mindestens eine weitere Stelleinheit (4) vorgesehen ist, um eine Vorwärmung mindestens eines Verbrennungsluftstroms zu regeln.

11. Brenner (100), insbesondere ein Ölbrenner, zum Erzeugen von Wärmeenergie mittels Feuerung,
**dadurch gekennzeichnet, dass** eine Regeleinrichtung (1) nach einem der Ansprüche 6 bis 10 aufweist.

## Claims

1. Method for controlling a temperature of a combustion air in a mixing zone (10) of a burner (100), with a supply of the combustion air for operating a burner to the mixing zone (10) via a supply path (20), wherein the combustion air flows through a first supply branch (22) in a first operating mode and in adjustable fractions through the first or a second supply branch (21) in a second operating mode, and heat from a combustion zone is supplied in the second supply branch (21),
**characterized in that**
heat is supplied to the combustion air in the first supply branch (22) by a heating element, which can be switched on and off.

2. Method according to Claim 1,
**characterized in that**, when there is a deviation of the temperature of the combustion air in the mixing zone (10) from a setpoint temperature, the adjustment of the fractions of the combustion air and/or the switching state of the heating element is changed, allowing the temperature of the combustion air in the mixing zone (10) to be adjusted to a setpoint temperature by mixing the fractions of the combustion air.

3. Method according to Claim 1 or 2,
**characterized in that** the temperature in the mixing zone (10) is detected and compared with predefined values.

4. Method according to one of Claims 1 to 3,
**characterized in that** the flows of the fractions of combustion air through the first and second supply branches (21, 22) take place in parallel.

5. Method for controlling a burner (100), in particular an oil burner, wherein the burner output is modulated,
**characterized in that** a division of the combustion air into fractions for a first and/or second supply branch (21, 22) and/or an adjustment of the switching state of the heating element (32) is changed in dependence on the degree of modulation by a method according to one of Claims 1 to 4.

6. Controller (1) for a burner (100), in particular an oil burner, with a supply path (20) for supplying a combustion air to a mixing zone for operating a burner (100), wherein the supply path (20) has a heating device (30) for preheating the combustion air to be supplied, the supply path (20) comprises a first supply branch (22), a second supply branch (21), arranged parallel to the first supply branch (22) and with a heat exchanger (31) that can be heated from a combustion zone, and a final control unit (4) for dividing the combustion air into combustion air fractions of the first and second supply branches, whereby the temperature of the combustion air in the mixing zone (10) can be adjusted to a setpoint temperature by mixing the fractions of combustion air,
**characterized in that**
the first supply branch (22) is equipped with a heating element (32) that can be switched on and off.

7. Controller (1) according to Claim 6,
**characterized in that** the final control unit (4) has final control elements that can be operated by way of an actuator, in order to shut off and/or open the supply branches (21, 22) branching off on the output side.

8. Controller (1) according to either of Claims 6 and 7,
**characterized in that** the heating device (32) of the supply branch (22) for starting the burner (100) is switchable, so that the combustion air is supplied as heated and/or untreated during the different operating modes of the burner (100).

9. Controller (1) according to one of Claims 6 to 8,
**characterized in that** at least one temperature detecting device (3) is provided in the region of the mixing zone (10) for detecting the temperature in the mixing zone (10).

10. Controller (1) according to one of Claims 6 to 9,
**characterized in that** at least one further final control unit (4) is provided in order to control a preheating of at least one combustion air stream.

11. Burner (100), in particular an oil burner, for generating thermal energy by means of firing,
**characterized in that** it has a controller (1) according to one of Claims 6 to 10.

## Revendications

1. Procédé de régulation de la température de l'air de combustion dans une zone de mélange (10) d'un brûleur (100), dans lequel l'air de combustion nécessaire au fonctionnement du brûleur est amené à la zone de mélange (10) par un parcours d'amenée (20), l'air de combustion s'écoulant dans un premier conduit d'amenée (22) dans un premier mode de fonctionnement et s'écoulant dans le premier et/ou dans un deuxième conduit d'amenée (21) en fractions réglables dans un deuxième mode de fonctionnement, de la chaleur provenant de la zone de combustion étant amenée dans le deuxième conduit d'amenée (21),
**caractérisé en ce que**
dans le premier conduit d'amenée (22), la chaleur est apportée à l'air de combustion par un élément chauffant apte à être branché et débranché.

2. Procédé selon la revendication 1, **caractérisé en ce que** lorsque la température de l'air de combustion dans la zone de mélange (10) s'écarte d'une température de consigne, le réglage des fractions d'air de combustion et/ou l'état de commutation de l'élément chauffant sont modifiés, grâce à quoi la température de l'air de combustion dans la zone de mélange (10) peut être réglée à une température de consigne par mélange des fractions d'air de combustion.

3. Procédé selon les revendications 1 ou 2, **caractérisé en ce que** la température dans la zone de mélange (10) est saisie et comparée à des valeurs prédéterminées.

4. Procédé selon l'une des revendications 1 à 3, **caractérisé en ce que** les écoulements des fractions d'air de combustion s'effectuent en parallèle dans le premier et le deuxième conduit d'amenée (21, 22).

5. Procédé de régulation d'un brûleur (100) et en particulier d'un brûleur à fioul, dans lequel la puissance du brûleur est modulée,
**caractérisé en ce que**
une division de l'air de combustion en fractions entre un premier et/ou un deuxième conduit d'amenée (21, 22) et/ou un réglage de l'état de commutation de l'élément chauffant (32) sont modifiés en fonction du degré de modulation, par recours à un procédé selon l'une des revendications 1 à 4.

6. Dispositif (1) de régulation d'un brûleur (100), en particulier d'un brûleur à fioul, présentant un parcours d'amenée (20) permettant d'amener de l'air de combustion à une zone de mélange pour un fonctionnement du brûleur (100), le parcours d'amenée (20) présentant un dispositif de chauffage (30) qui permet de préchauffer l'air de combustion à amener, le parcours d'amenée (20) comprenant un premier conduit d'amenée (22), un deuxième conduit d'amenée (21) disposé en parallèle au premier conduit d'amenée (22) et présentant un échangeur de chaleur (31) apte à être chauffé par une zone de combustion, ainsi qu'une unité de réglage (4) qui divise l'air de combustion en fractions d'air de combustion pour le premier et le deuxième conduit d'amenée, suite à quoi la température de l'air de combustion peut être réglée à une température de consigne dans la zone de mélange (10) par mélange des fractions d'air de combustion, **caractérisé en ce que**
le premier conduit d'amenée (22) est équipé d'un élément chauffant (32) apte à être branché et débranché.

7. Dispositif de régulation (1) selon la revendication 6, **caractérisé en ce que** l'unité de réglage (4) présente un élément de réglage actionné par un actionneur et qui bloque et/ou ouvre les conduits d'amenée (21, 22) dont la sortie se ramifie.

8. Dispositif de régulation (1) selon l'une des revendications 6 et 7, **caractérisé en ce que** le dispositif de chauffage (32) du conduit d'amenée (22) peut être commuté lors du démarrage du brûleur (100) de telle sorte que pendant les différents modes de fonctionnement du brûleur (100), l'air de combustion est amené après avoir été chauffé et/ou sans avoir été traité.

9. Dispositif de régulation (1) selon l'une des revendications 6 à 8, **caractérisé en ce qu'**au moins une unité (3) de saisie de température est prévue au niveau de la zone de mélange (10) pour saisir la température qui règne dans la zone de mélange (10).

10. Dispositif de régulation (1) selon l'une des revendications 6 à 9, **caractérisé en ce qu'**au moins une autre unité de réglage (4) est prévue pour réguler un préchauffage d'au moins un écoulement d'air de combustion.

11. Brûleur (100), en particulier brûleur à fioul, destiné à dégager de l'énergie thermique par combustion,
**caractérisé en ce qu'**il présente un dispositif de régulation (1) selon l'une des revendications 6 à 10.
